# EUROPEAN PATENT APPLICATION

(11) **EP 2 827 291 A1**
(43) Date of publication of application: **21.01.2015**
(21) Application number: 13306035.0
(22) Date of filing: 19.07.2013
(51) Int. Cl.: G06Q 20/12, G06Q 20/32, G06Q 20/38, G06Q 20/40, G06Q 30/06

(54) **Method for securing a validation step of an online transaction**

(71) Applicant: Gemalto SA, 92190 Meudon (FR)
(72) Inventor: Arnald, Valery, 92190 MEUDON (FR); Desjardins, Jean-Michel, 92190 MEUDON (FR); Thill, Michel, 92190 MEUDON (FR); Suzuki, Shintaro, 92190 MEUDON (FR); Grellier, Stéphane, 92190 MEUDON (FR)
(74) Representative: Lotaut, Yacine Diaw

(57) **Abstract**

The present invention relates to a method and system for securing a validation process of an online payment transaction. During an online transaction on a mobile device, it is requested a contactless tap from a contactless display card (thanks to NFC reader mode in the mobile device) to establish a contactless exchange session. During this contactless exchange session, the display card receives the amount requested for the transaction and the identification of merchant. The user is invited to check amount and merchant identification on the screen of the display card. When the user validates the transaction by for example pressing on a corresponding button then the display card creates an authorization message comprising enciphered financial user information and data on the transaction. With a second tap from the display card, the mobile device receives the authorization message which is transmitted to the display card issuer through the merchant for validation.

## Description

### TECHNICAL FIELD

The present invention generally relates to system and method for securing transactions in a mobile device. More specifically, the present invention relates to a method and system for securing a validation process of an online payment transaction.

### BACKGROUND ART

Technology has revolutionized the way that consumers make purchases and expanded the range of retail channels. Indeed, mobile devices, such as mobile phones, play an increasingly versatile role in daily life. Many new features and services are being developed in an attempt to expand mobile phones beyond their traditional role of voice and message transmission. Some of these new features and services have more stringent requirements for data security than do existing applications. For example, the viability of purchase by mobile phone depends on the ability of the mobile phones and the service providers to ensure the safety of the user's private information against various security threats, including the physical theft of the mobile phones and/or the illegitimate use of the mobile phone. Unauthorized possession of a user's mobile phone may lead to a compromise of the user's private and sensitive data.

To traverse this security concern, some mobile device service providers allow users to store important information such as bank details at the network level such that the service providers act as data agents for the end users. Despite the conveniences of this approach, the centralization of user information in connection with network storage can be vulnerable to hacker attacks. For this reason, many consumers refuse to let online service providers maintain credit card information.

Some mobile devices provide an interface to capture a user's fingerprints for use with an authentication protocol. This solution can be vulnerable because fingerprints can be relatively easy to capture, particularly if a thief has possession of the user's mobile device (which will likely contain many fingerprints).

Hardware-based solutions may be utilized to protect user data stored by mobile devices. These solutions employ encryption/decryption techniques to protect the user's sensitive data. The entire protection mechanism utilized by these solutions resides on the mobile device itself, thus making the protected data vulnerable to attack by a thief having sufficient hardware know-how, diagnostic equipment, and hacking abilities.

One-time password (OTPs) solutions may be used in the fight against cyber fraud. Instead of relying on traditional memorized passwords, OTPs are requested by consumers each time they want to perform transactions using the online or mobile banking interface. When the request is received the password is sent to the user's mobile device via SMS. The password is expired once it has been used or once its scheduled life-cycle has expired. This solution can be vulnerable because an attacker can get the OTP, particularly if a thief has possession of the user's mobile device (which will receive the OTP).

Furthermore, during a transaction with a mobile payment the user has few or no means to check whether the communications between mobile inputs and the mobile application payment are intercepted and whether the transaction data is tampered with before to be transmitted to the merchant.

Secure communication solutions may be used and can be achieved through known anonymous key exchange protocols, which, without additional safeguards, are vulnerable to fraudulent activities, such as man-in-the-middle attacks.

There is a need to protect, during a payment transaction, information for validating said transaction, such as bank details, sent through the mobile device to the merchant or financial institutions via the network.

### SUMMARY OF THE INVENTION

The following summary of the invention is provided in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

The present invention addresses the aforementioned drawbacks. The present invention relates to a system and method for enabling to secure payment transactions in a mobile device comprising a contactless interface.

According to the present invention, there is provided a service for allowing secure financial transactions to be carried out in the mobile device. During a confirmation step of the transactions, the service involves to authenticate a user's identity and to complete the transaction with a contactless display device. And in the event that the user is authenticated arranging for the transaction to be completed without revealing the user's financial details and/or other personal details to that mobile device. Transaction data is communicated from the mobile device to the contactless display device over a contactless communications channel.

By separating the validation step from the transaction processing into the mobile device, users can be authenticated and transactions authorized without providing the user's financial details to the mobile device. This provides protection against misuse of, for example a user's debit or credit card, should it become compromised. In this way, fraud and theft due to misappropriation of financial details can be minimized.

The invention provides a trusted payment environment that protects a user's financial details, but allows them to be securely authenticated and arranges for transactions to be fulfilled, whilst providing other parties with reassurance that transactions will be completed.

Example embodiments provide ability for contactless display device to be used to check and process all sensitive financial information inside card, and then send ciphered financial information to complete the transaction.

With embodiments of the present invention, during an online transaction on a mobile device, it is requested a contactless tap from a contactless display card (thanks to NFC reader mode in the mobile device) to establish a contactless exchange session. During this contactless exchange session, the display card receives the amount requested for the transaction and the identification of merchant. The user is invited to check amount and merchant identification on the screen of the display card. When the user validates the transaction by for example pressing on a corresponding button then a PIN can be requested to be entered by the user. The entered PIN is checked by the display card. The display card creates an authorization message comprising enciphered financial user information and data on the transaction. With a second tap from the display card, the mobile device receives the authorization message which is transmitted to the display card issuer through the merchant for validation.

Aspects of the embodiments of the present invention relate in general to a method for securing a validation step of an online transaction on a contactless mobile device connected to a network, wherein during said validation step,
- receiving from the network a request of confirmation of the online transaction,
- transmitting, from the mobile device to a display device, transaction data through a first contactless communication established between the mobile device and the display device, the display device being able to manage and maintain user's sensitive data,
- an authorization request message is created from the transaction data, the authorization request message comprising sensitive user data relevant to determining if the online transaction should be granted,
- sending of the authorization request message from the display device to the mobile device through a second contactless communication established between the mobile device and the display device,
- sending of the authorization request message from the mobile to the network for validation of the online transaction.

In other various methods, the authorization request message is sent from the mobile device to a merchant providing the online transaction through the network and then to an issuer of the display device able to validate the online transaction. When the issuer receives the authorization request message then it determines if the online transaction should be authorized, and sends an authorization response message back to the merchant to indicate whether or not the current transaction is authorized.

In other various methods, the authorization request message is created by the display device when the authentication of the user by the display card is successful.

In other various methods, sensitive user data comprises the contents of the magnetic-stripe data, track 1, track 2, Card Verification Value, financial information credit card and/or a payment account number. The authorization request message comprises at least a request for authorization to conduct the online transaction, sensitive user data, currency code, sale amount, merchant transaction stamp, acceptor city, acceptor state/country. In a preferred embodiment, sensitive user data of the authorization request message are encrypted by the display device.

In other various methods, the display device is a contactless display card comprising an IC card comprising circuits such as a secure element, a contactless interface, control keys and a display screen provided onto the surface of the IC card.

The present invention also relates to a system comprising a contactless mobile device configured to perform an online transaction with a merchant through a network, said mobile device being configured to communicate with a display card by contactless wherein the online transaction is completed according to the method of the present invention.

### BRIEF DESCRIPTION OF THE DRAWINGS

The following detailed description will be better understood with the drawings, in which:
FIG. 1 illustrates the different entities involved in a process flow of a transaction in a mobile device illustrated in FIG.2.
FIG. 2 is a logic flow diagram in accordance with an exemplary embodiment of this invention during a transaction processing.

### DETAILED DESCRIPTION OF THE EMBODIMENTS OF THE INVENTION

Reference will now be made in detail to various embodiments of the invention. Examples of these embodiments are illustrated in the accompanying drawings. While the invention will be described in conjunction with these embodiments, it will be understood that it is not intended to limit the invention to any embodiment. On the contrary, it is intended to cover alternatives, modifications, and equivalents as may be included within the spirit and scope of the invention as defined by the appended claims. In the following description, numerous specific details are set forth in order to provide a thorough understanding of the various embodiments. However, the present invention may be practiced without some or all of these specific details. In other instances, well known process operations have not been described in detail in order not to unnecessarily obscure the present invention.

The same elements have been designated with the same referenced numerals in the different drawings. For clarity, only those elements and steps which are useful to the understanding of the present invention have been shown in the drawings and will be described.

Further, the mechanisms of data communication between the parties and their environment have not been detailed either, the present invention being here again compatible with usual mechanisms.

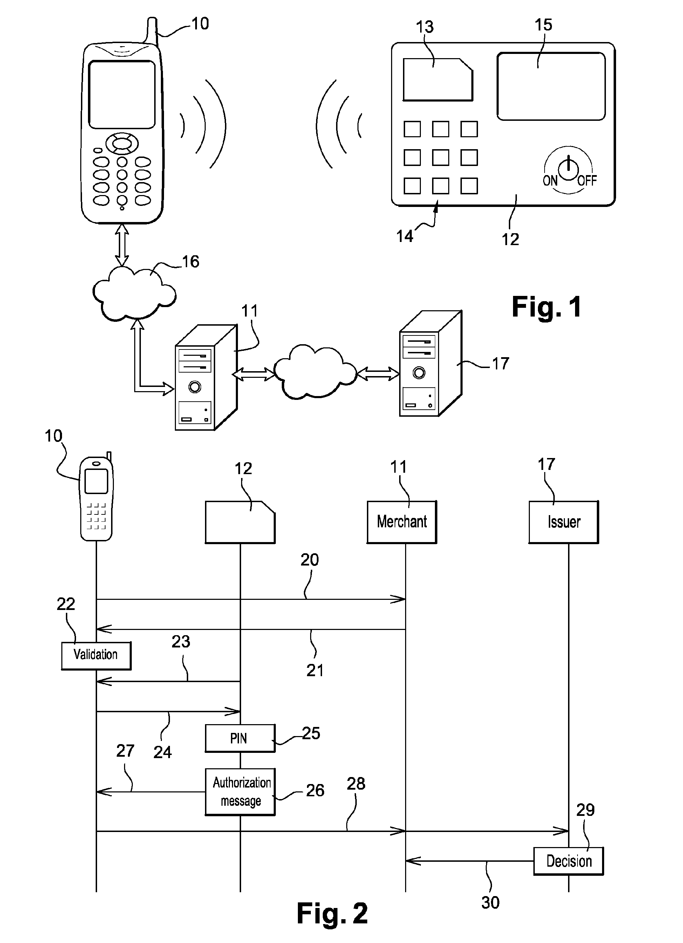

Furthermore, the connecting lines shown in the various figures contained herein are intended to represent exemplary functional relationships and/or physical couplings between the various elements. It should be noted that many alternatives or additional functional relationships or physical connections may be present in a practical system. Furthermore, the mobile device and the merchant illustrated in FIG. 1 may communicate via any suitable communication medium (including the Internet), using any suitable communication protocol.

Moreover, when an action is said to be performed by a terminal, it is in fact executed by a microprocessor in this terminal controlled by instruction codes recorded in a program memory on said terminal. An action is also ascribed to an application or software. This means that part of the instruction codes making up the application or software are executed by the microprocessor.

FIG. 1 is a block diagram illustrating the participants in the processes described in FIG. 2 according to an embodiment of the present invention. FIG. 1 depicts an example of the system in which a mobile communication device 10, a merchant 11 and a display device 12 are implemented

The mobile device 10 may comprise a secure element, a contactless interface, and an antenna capable of communicating using any suitable communications scheme. The mobile device 10 may be in any suitable form for contactless device able to perform an online transaction. For example, suitable mobile communication devices 10 can be hand-held and compact so that they can fit into a user's wallet and/or pocket (e.g., pocket-sized). The mobile device 10 typically comprises a processor, a memory, input device, output devices, and near-field communication (NFC) devices, all of which are operatively coupled to the processor. Specific examples of mobile communication devices 10 can include cellular or wireless phones, tablets, smartphones, personal digital assistances (PDAs), pagers, portable computers, and the like. Although a mobile communication device 10 is referred to in the present application, embodiments of the present invention could be implemented with a number of different mobile user devices capable of communicating with the entities described herein.

In a typical embodiment, the mobile device 10 is a cell phone, although as noted, implementation of the present invention is not limited to this embodiment as the mobile device that functions as an online transaction device may take any suitable form convenient for use by a consumer.

The display device 12 stores sensitive user financial information (e.g., credit card and/or other payment account number, billing address, the contents of the magnetic-stripe data, track 1, track 2, Card Verification Value, etc.) and/or any other user-related financial information. The display card 12 is provided to the user by an issuer 17. The display card 12 provides the functionality to manage and maintain the user's payment information.

The display device 12 is in a preferred embodiment a display card. The display card is an IC's (Integrated circuit) card comprising circuits such as a secure element 13, a memory, and a user interface.

The display card 12 interfaces with the user interface for user interaction (e.g., to enter and view information). The user interface comprises control keys 14 and a display screen 15 provided onto the surface of the IC card.

The secure element 13 is used by the display card 12 to host and store data and applications that require a high degree of security such as cryptographic keys or software routines, in order to perform ciphering or authentication processes.

The display card 12 is a dual interface smartcard. The smartcard is provided with a contact interface and with a remote communication interface. The contact interface is for instance compliant with the ISO 7816 standard requirements. The remote communication interface is for instance a contactless communication interface. This contactless communication interface may be for instance compliant with the ISO 14443 standard requirements. The integrated microcontroller is connected to both communication interfaces to perform communication.

The remote communication interface or contactless interface can refer to an NFC transceiver, a contactless reader or an unpowered RFID. The contactless interface of the display card establishes a contactless communication channel with the mobile device to exchange data using a short range communication method, such as a near field communications (NFC) capability. Examples of such NFC technologies or similar short range communications technologies include ISO standard 14443, RFID, or other near field communications that may be developed in the future and configured to permit a user to interact with other devices over a contactless communication as described herein.

In the specification, a contactless communication channel refers to exchanging information using NFC technology that requires the communicating devices to be "tapped" which means that the contactless interfaces are brought within several centimeters of each other.

The display card 12 can comprises an internal energy system such a battery. Before to lose the contactless power, the internal energy system can be started to allow keeping the information received during the contactless communication.

The display device 12 can be any physical contactless token comprising a display such as a USB stick with appropriate memory for storing user sensitive data such as financial data. In the embodiment illustrated herein, the display device is a display card.

As used herein, the term "issuer" can encompass any entity that issues and maintains a financial account (e.g., credit, debit, or prepaid) and the display card 12 associated with the financial account. Alternatively, the issuer may not issue the display card 12 directly and instead may contract with another party to issue the display card.

The merchant 11 may be implemented using, for example, one or more servers and/or other network hardware that are accessible to various client devices via a network 16, which may include a public network, such as the Internet, a private network, such as an intranet, or combinations thereof, that may utilize a variety of networking protocols now available or later developed including, but not limited to TCP/IP based networking protocols. Specifically, the merchant is hosted by a server which is managed by a provider. The Merchant can be an entity that provides Web Services. Examples of merchants include Application Service Providers (ASP), Storage Service Providers (SSP) or Internet Service Providers (ISP).

The merchant is a website that hosts applications and offers services.

As used herein, a "server" is a computing device that may be configured to interact in an automated fashion with other devices over a network to serve content and web pages, to issue responses to communications from other network devices and to respond to queries from other network devices.

In the embodiment illustrated herein, a user executes a client application, e.g. a web browser, on the mobile device 10 when he wants to perform a transaction, e.g. to access to a service of the merchant 11. To complete this transaction, the mobile device 10 interacts with the display card 12 over the contactless interface.

The expression "transaction" can be taken in its broadest meaning. I.E. it cannot be limited to financial transaction but can also cover any Internet transaction, any transaction occurring through a telecommunication network etc.

FIG. 2 shows a schematic illustration of a transaction flow and a validation flow of an exemplary embodiment of the invention. Therein, the process flowing between the mobile device 10, the merchant 11, the issuer 17 and the display card 12 is depicted with labeled arrows to which respective Roman numbers are assigned. The flow is understood as being performed sequentially from top to bottom as indicated by the increasing Roman numbers. However, it should be noted that there may be multiple instances of this protocol run in parallel without specified ordering.

At step 20, during the transaction flow, the mobile device 10 is connected to the merchant online 11 via the network 16. The merchant online 11 generates a presentation of merchandise transactional content on the mobile device 10. When the user would like to purchase a product online (e.g., goods and/or services) from the merchant 11, a purchasing transaction is enabled. The user selects to purchase the product online by for example a tap-to-buy on a touch screen or set of actions. At step 21, in response to the signal(s) received from the user mobile device 10 the online merchant 11 may provide an online form to said mobile device 10, and require the user to provide information to complete the form wholly or partially. Completing the form can be a requisite for approving the purchase request. For example, the online form may request the consumer's name, mailing address, email address, telephone number, financial information (e.g., credit card and/or other payment account number, billing address, etc.) and/or any other user-related information. In any regard, as referred to herein, a "form" can include any request for information from a user.

At step 22, it is requested to the user to complete the transaction by providing financial information (e.g., credit card and/or other payment account number, billing address, etc.). Then, the validation flow is enabled. For that, the user is requested (e.g., prompted) to present his contactless display card 12 to the mobile device 10.

At step 23, a contactless communication channel is established between the display card 12 and the mobile device 10. As part of facilitating the establishment of this communication using the contactless interface, a first tap operation may be used to activate this communication. Note that in the context of the present invention, a tap refers to a process where a user presents his display card to the mobile device for exchange of information.

At step 24, the mobile device 10 sent to the display card 12 transaction data (e.g., the amount of the purchase, the merchant identifier, the information about the product to be purchased, etc.) and/or any other transaction-related information. The transaction data may be stored in a buffer of the display card 12.

At the end of the transmission of the transaction data to the display card 12, the transaction flow at the side of the mobile device 10 is in standby and is waiting a second tap operation. The contactless communication is ended.

At the end of the transmission of the transaction data, the contact interface of the display card 12 may be set up. During the validation steps processed by the display card 12 (such as entering and providing the user's financial details) said display card 12 is not in communication with any device. So that, the mobile device can have no hint about the user's sensitive data supplied to the network by the card bearer. The present invention allows preserving user privacy.

The transaction data is displayed on the screen of the display device. At step 25, when the user validate the transaction shown on the screen of the display card, by for example pressing a "button OK", an authentication step can be set up. To authenticate the user, the user is involved by having to enter through the control keys 14 an authorization data which is known to the sole user and the display card 12.

The authorization data is any identifier/indicia code suitably configured to allow an authenticated access. The authorization data can be a Personal Identification Number (or PIN), a secret data, a password, a passcode, a biometric data, a digital certificate any identification code and/or the like.

Next, the display card 12 analyses whether the entered authorization data is the expected data stored within said display card. If the answer is yes, then the display card 12 authorizes, at step 26, to create an authorization request message. If the answer is no, the step 25 can be repeated until to reach a predefined number of repetition in general 3 times. Typically, when this predefined number is reached the display device 12 can be locked or in standby.

The "authorization request message" can comprise a request for authorization to conduct an electronic payment transaction, currency code, sale amount, merchant transaction stamp, acceptor city, acceptor state/country and data relevant to determining if the transaction validation request should be granted such as the user financial information, etc. For example, the sensitive user financial data may comprise one or more of an account holder's payment account number. The authorization request message may be protected using a secure encryption method (e.g., 128-bit SSL or equivalent) in order to prevent unauthorized access to account or transaction data. Sensitive user financial data are then not transmitted in clear to the mobile device, and they do not circulate in clear during the transfer from the mobile device to the merchant 11.

The authorization request message is sent from the display card 12 to the mobile device 10, at step 27, by a second tap operation from the display card to the mobile device. Typically, the authorization request message is sent, at step 28, from the mobile device 10 to the merchant 11 through the network 16 and then to the issuer 17.

After receiving the authorization request message, the issuer 17 processes the received message and determines, at step 29, if the transaction should be authorized. The issuer 17 sends an authorization response message back to the merchant 11, at step 30, to indicate whether or not the current transaction is authorized. The merchant 11 is thus made aware of whether the issuer 17 has authorized the transaction, and hence whether the transaction can be completed.

In an embodiment, the present invention is also suitable when the mobile device is a contactless merchant terminal such as a contactless point of sale (POS) terminal or Merchant's Smart phone (key point)

## Claims

1. A method for securing a validation step of an online transaction on a contactless mobile device connected to a network, wherein during said validation step,
- receiving from the network a request of completing the online transaction,
- transmitting, from the mobile device to a contactless display device, transaction data through a first contactless communication established between the mobile device and the display device, the display device being able to manage and maintain user's sensitive data,
- an authorization request message is created from the transaction data, the authorization request message comprising sensitive user data relevant to determining if the online transaction should be granted,
- sending of the authorization request message from the display device to the mobile device through a second contactless communication established between the mobile device and the display device,
- sending of the authorization request message from the mobile to the network for validation of the online transaction.

2. The method according to the previous claim, wherein the authorization request message is sent from the mobile device to a merchant providing the online transaction through the network and then to an issuer able to validate the online transaction.

3. The method according to the previous claim, wherein when receiving the authorization request message by the issuer
- determining if the online transaction should be authorized,
- sending of an authorization response message back to the merchant to indicate whether or not the current transaction is authorized.

4. The method according to any previous claims, wherein the authorization request message is created when the authentication of the user by the display card is successful.

5. The method according to any previous claims, wherein The authorization request message comprises at least a request for authorization to conduct the online transaction, sensitive user data, currency code, sale amount, merchant transaction stamp, acceptor city, acceptor state/country.

6. The method according to any previous claims, wherein user's sensitive data comprises the contents of the magnetic-stripe data, track 1, track 2, Card Verification Value, financial information credit card and/or a payment account number.

7. The method according to any previous claims, wherein at least user's sensitive data of the authorization request message are encrypted.

8. The method according to any previous claims, wherein transaction data comprises the amount of the purchase, the merchant identifier, the information about the product to be purchased.

9. The method according to any previous claims, wherein the contactless communication is established by a tap operation between the mobile device and the display device.

10. The method according to any previous claims, wherein the authorization request message is sent from the display device to the mobile device by a tap operation.

11. The method according to any previous claims, wherein the contactless mobile device is a cellular or wireless phone, a tablet, a smartphone, a personal digital assistance (PDA), a pager, a portable computers or a contactless merchant terminal such as a contactless point of sale (POS) terminal or a Merchant's Smart phone.

12. The method according to any previous claims, wherein the display device is a display card comprising an IC card comprising circuits such as a secure element, a contactless interface, control keys and a display screen provided onto the surface of the IC card.

13. The method according to any previous claims 2 to 12, wherein the display card is provided to the user by the issuer.

14. A validation online transaction system, comprising a contactless mobile device configured to perform an online transaction with a merchant through a network, said mobile device being configured to communicate with a contactless display device by contactless wherein the online transaction is completed according to any previous claims.
